# FASCICULE DE BREVET EUROPEEN

(11) **EP 2 051 323 B1**
(45) Date de publication et mention de la délivrance du brevet: **06.10.2010**
(21) Numéro de dépôt: 08305641.6
(22) Date de dépôt: 06.10.2008
(51) Int. Cl.: H01M 8/04, F24F 13/08

(54) **Pile à combustible comprenant un dispositif de refroidissement par gaz caloporteur**
Brennstoffzelle, die eine Abkühlvorrichtung mit Hilfe eines Kühlmittelgases umfasst
Fuel cell comprising a cooling device using a heat conductive gas

(30) Priorité: 17.10.2007 FR 0758390
(43) Date de publication de la demande: 22.04.2009
(73) Titulaire: L'Air Liquide Société Anonyme pour l'Etude et l'Exploitation des Procédés Georges Claude, 75007 Paris (FR)
(72) Inventeur: ROBERGE, Guillaume, 38300, BOURGOIN (FR)
(74) Mandataire: De Cuenca, Emmanuel Jaime

(56) Documents cités:
- EP-A- 0 391 006
- EP-A- 1 515 383
- JP-A- 58 178 964
- JP-A- 2003 036 878
- US-A1- 2003 096 148
- US-A1- 2005 170 223

## Description

La présente invention concerne une pile à combustible comprenant un dispositif de refroidissement par gaz caloporteur.

L'invention concerne plus particulièrement une pile à combustible comprenant une pluralité de cellules adjacentes formant un empilement de cellules, un dispositif de refroidissement dudit empilement de cellules par échange thermique forcé avec un gaz caloporteur tel que l'air au moyen d'au moins un générateur d'un flux gazeux selon un axe d'écoulement.

Pour refroidir les empilements (« Stacks ») de cellules formant une pile à combustible il est connu d'utiliser de l'air pulsé qui vient circuler entre les plaques de pile mono-polaires ou plaques de pile bipolaires formant les cellules élémentaires de la pile.

Dans une géométrie connue, les faces extérieures des plaques mono-polaires ou bipolaires de pile à combustible comportent des ailettes de refroidissement. Les ailettes de refroidissement de deux plaques de deux cellules adjacentes coopèrent en contact pour former de canaux de guidage pour l'air pulsé de refroidissement. De préférence le flux d'air pulsé est sensiblement parallèle aux canaux de refroidissement.

Il a été constaté que le refroidissement de l'empilement de cellules n'est pas totalement satisfaisant du fait notamment des disparités en terme de température maximale atteinte au sein de cellules adjacentes d'un même empilement. La demanderesse a notamment constaté une grande hétérogénéité de refroidissement suivant les zones de l'empilement de cellules.

Ceci se traduit par des dégradations dans les performances de la pile.

Pour atténuer ces disparités, une solution connue consiste à redéfinir la géométrie des ailettes formant les canaux de refroidissement. Cette solution s'avère cependant complexe et potentiellement coûteuse.

Le document EP-A-1515383 décrit un système de pile à combustible comprenant une hélice soufflante et un répartiteur positionné entre l'hélice et la pile. Le répartiteur change la direction principale du flux d'air depuis l'hélice vers la pile et homogénéise également ce flux d'air.

Le document JP2003036878 décrit une pile à combustible comprenant un ventilateur radial et un collecteur d'air comprenant des ailettes formant une grille pour homogénéiser le flux d'air.

Le document JP58178964 décrit une pile à combustible comprenant un ventilateur radial et deux ensembles de plaques de guidage du flux d'air pour homogénéiser le flux d'air.

La solution consistant à agir en amont sur le flux généré par les ventilateurs a été jusqu'à présent écartée car susceptible de générer des pertes de charges supplémentaires dans le circuit de refroidissement ou une consommation électrique accrue desdits ventilateurs.

Un but de la présente invention est de pallier tout ou partie des inconvénients de l'art antérieur relevés ci-dessus.

A cette fin, la pile selon l'invention, est définie par la revendication 1.

Par ailleurs, des modes de réalisation de l'invention peuvent comporter l'une ou plusieurs des caractéristiques suivantes :
- la ou les pales du redresseur sont cintrées selon une première direction sensiblement perpendiculaire à l'axe du flux et selon une seconde direction sensiblement parallèle à l'axe du flux, pour rediriger au moins une partie du flux gazeux ayant un débit relativement plus important vers au moins une partie du flux ayant un débit relativement plus faible,
- le générateur d'un flux gazeux est espacé de l'empilement d'une distance comprise entre 15 et 60 mm et de préférence de l'ordre de 30 mm.
- l'organe redresseur de flux est espacé de l'empilement d'une distance supérieure à 10 mm et de préférence comprise entre 20 et 35 mm.
- l'organe redresseur de flux comporte six à huit pales statiques,
- les pales statiques de l'organe redresseur sont reliées chacune à un cadre extérieur (mais pas à un moyeu central),
- la pile comprend plusieurs générateurs d'un flux gazeux adjacents destinés à refroidir respectivement des zones adjacentes correspondantes de l'empilement et en ce qu'elle comporte un organe redresseur respectif associé à chaque générateur d'un flux gazeux,
- la pile est du type à membrane échangeuse de protons.

D'autres particularités et avantages apparaîtront à la lecture de la description ci-après, faite en référence aux figures dans lesquelles :
- la figure 1 représente une vue en perspective schématique et partielle d'un exemple de pile munie d'un dispositif de refroidissement selon l'invention,
- la figure 2 représente une vue en perspective illustrant une variante de réalisation possible et non limitative d'un détail de la figure 1 (organe redresseur),
- la figure 3 représente les deux courbes de profils de vitesse du gaz de refroidissement des différents canaux d'une cellule de pile, respectivement avec (courbe passant par les points) et sans l'invention (courbe passant par les croix).

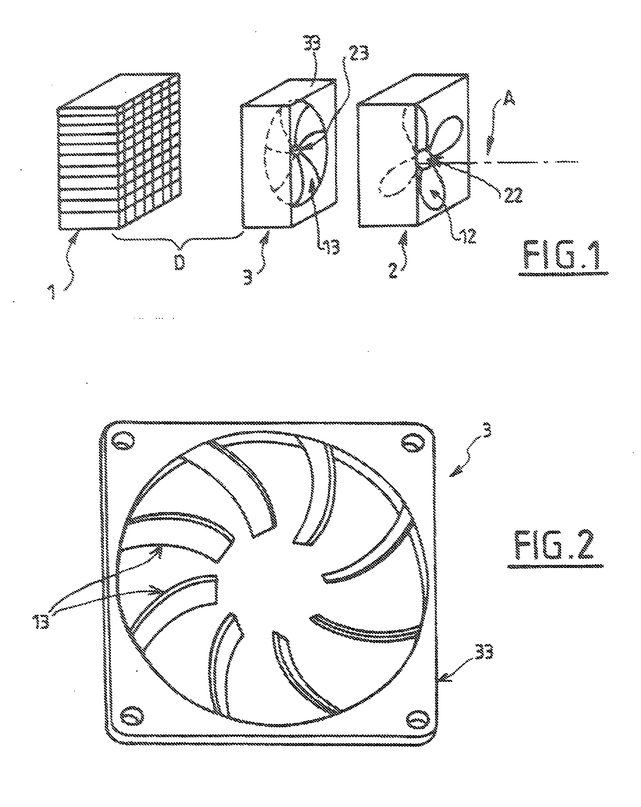

Dans l'exemple de réalisation illustré à la figure 1 une pile à combustible est représentée uniquement et symboliquement par son empilement 1 (« stack ») de cellules élémentaires et le dispositif de refroidissement de l'empilement associé.

La pile comporte un dispositif de refroidissement dudit empilement 1 de cellules par échange thermique forcé avec un gaz caloporteur tel que l'air au moyen d'au moins un générateur 2 d'un flux gazeux selon un axe A. Le générateur 2 est par exemple un ventilateur ou équivalent.

Selon l'invention la pile comporte au moins un organe redresseur 3 de flux gazeux disposé statiquement entre l'empilement 1 de cellules et le générateur 2. L'organe redresseur 3 comprend au moins une pale 13 statique conformée pour diminuer l'hétérogénéité du débit du flux gazeux issu du générateur 2 selon une direction sensiblement perpendiculaire à l'axe A du flux avant son arrivée à l'empilement 1.

Par exemple, et comme visible dans l'exemple possible de la figure 2, l'organe redresseur 3 de flux peut comporter une pluralité de pales 13 statiques (par exemple six à huit) qui peuvent être cintrées de façon symétrique autour d'un axe de révolution. De préférence cet axe de révolution est, en position montée, sensiblement confondu avec l'axe A du flux gazeux de refroidissement passant par la partie centrale (moyeu) du générateur 2.

De préférence, les-pales 13 statiques de l'organe redresseur 3 sont reliées chacune à un cadre 33 extérieur mais pas à un moyeu fixe central (figure 2).

De préférence les pales 13 du redresseur 3 sont cintrées selon une première direction sensiblement perpendiculaire à l'axe A du flux et selon une second direction sensiblement parallèle à l'axe A du flux pour rediriger au moins une zone du flux gazeux ayant un débit relativement plus fort vers au moins une zone du flux ayant un débit relativement plus faible.

Par exemple le redresseur 3 redirige une partie de la périphérie du flux (relativement éloignée de l'axe de symétrie longitudinal central du flux) vers une zone plus centrale du flux (relativement plus proche de l'axe A de symétrie longitudinal central du flux).

Le générateur 2 de flux (ventilateur) est espacé de l'empilement 1 d'une distance comprise de préférence entre 15 et 60 mm et encore plus préférentiellement de l'ordre de 30 mm.

L'organe redresseur est quant à lui espacé de l'empilement 1 d'une distance D supérieure à 10 mm et de préférence comprise entre 20 et 35 mm.

Par exemple l'organe redresseur 3 peut avoir une largeur ou épaisseur de 12 mm et être placé contre le ventilateur 2, du coté refoulement de ce dernier.

La demanderesse a notamment constaté que l'invention permet d'homogénéiser le flux d'admission des canaux de refroidissement en faisant disparaître ou diminuer les zones moins bien alimentées qui sont situées dans le prolongement de l'axe central du ventilateur. En effet, le redresseur permet de renvoyer un débit d'air à une vitesse de l'ordre de 4 m/s dans la zone située dans le prolongement de l'axe du ventilateur 2 alors que, dans la même configuration sans redresseur disposé selon l'invention, on peut observer des canaux dans lesquels la vitesse d'écoulement est inférieure à 1 m/s voir quasi nulle.

L'organe redresseur 3 induit ainsi une diminution des vitesses dans les canaux des extrémités des plaques de pile (éloignés de la partie centrale) au profit de la partie centrale. Il faut noter que la diminution des vitesses dans les canaux périphériques reste acceptable car en pratique l'invention ne fait pas chuter la vitesse d'écoulement dans ces derniers à moins de 3 m/s environ.

Ainsi, certains canaux dits centraux (axe du ventilateur) voient passer leur alimentation en air de refroidissement de1 m/s à plus de 4m/s grâce à l'invention.

La distance de l'organe redresseur 3 par rapport aux plaques est de préférence au minimum de 10 mm pour permettre notamment un établissement plus homogène et stabilisé du flux d'air en sortie de l'organe redresseur 3.

L'invention présente d'autres avantages. Ainsi, l'agencement ne semble pas induire de perturbations acoustiques ni de surconsommation des ventilateurs due à la présence des organes redresseurs 3 ni de pertes de charge significatives.

Des essais anémométriques sur un système de pile MOBIXANE (marque déposée) de la société Axane ont permis de cartographier de façon précise les vitesses en sortie des canaux de refroidissement (au centre de chaque canal, à 4mm de la sortie). L'invention permet de limiter de façon considérable les disparités de débit au sein des canaux. En effet on peut constater que les zones situées dans le prolongement des parties centrales (moyeux) des ventilateurs 2 sont mieux alimentés selon l'invention (environ 4 à 5 m/s contre 1 à 2 m/s sans l'invention). Les redresseurs 3 permettent donc d'homogénéiser le débit de refroidissement. Paradoxalement, l'invention ne crée pas de forte augmentation des pertes de charges, et donc pas de diminution significative du débit global de refroidissement comme on pourrait s'y attendre a priori. En effet, le débit moyen d'air reste sensiblement identique dans les deux configurations (8.27 m/s sans l'invention et 8.35 m/s avec l'invention).

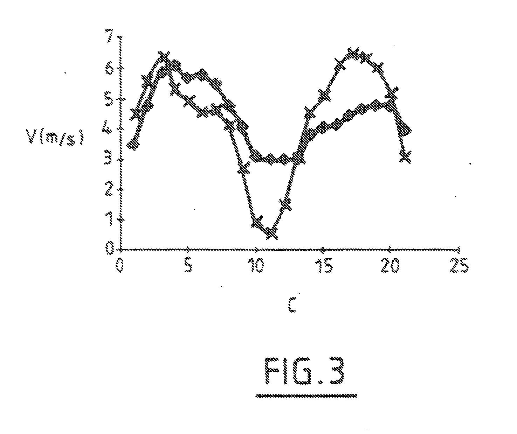

La figure 3 illustre également bien les effets de l'invention au niveau d'une cellule de pile d'un empilement. En effet, cette figure 3 représente les deux courbes de profils de vitesse du gaz de refroidissement (vitesse V en m/s en ordonnées) des différents canaux C (numérotés de 1 à 21 en abscisse) d'une cellule située dans le prolongement de l'axe central du ventilateur.

On constate aisément que selon l'invention (représenté par des points) les vitesses dans les canaux de refroidissement sont plus homogènes que sans le redresseur 3 selon l'invention (représentés par des croix).

Cette homogénéisation d'écoulement de refroidissement dans les canaux sur la thermique d'une cellule est avantageuse pour le fonctionnement de la pile. En effet, l'invention permet de diminuer le gradient de température au sein d'un ensemble membrane électrode (MEA) d'une cellule. L'invention permet notamment de faire diminuer la température maximum locale d'un tel ensemble membrane-électrode (typiquement de 4°K : 329° K contre 333 K pour un système sans l'invention). L'invention n'affecte pas où peu les cellules qui était déjà favorisées dans l'écoulement d'air (leur température maximale reste stable (typiquement autour de 322° K).

## Revendications

1. Pile à combustible comprenant une pluralité de cellules adjacentes formant un empilement (1) de cellules, un dispositif de refroidissement dudit empilement (1) de cellules par échange thermique forcé avec un gaz caloporteur tel que l'air au moyen d'au moins un générateur (2) d'un flux gazeux selon un axe (A) d'écoulement, la pile comportant au moins un organe redresseur (3) de flux gazeux disposé entre l'empilement (1) de cellules et le générateur (2), l'organe redresseur (3) comprenant au moins une pale (13) statique conformée pour diminuer l'hétérogénéité du débit du flux gazeux issu du générateur (2) selon une direction sensiblement perpendiculaire à l'axe (A) du flux avant son arrivée à l'empilement (1), **caractérisée en ce que** le générateur (2) d'un flux gazeux est une hélice soufflante comprenant au moins une pale tournante (12) reliée à un moyeu (22) tournant et **en ce que** la ou les pales (13) statiques du redresseur (3) sont cintrées pour rediriger une partie du flux située de façon relativement éloignée de l'axe (A) du flux passant par le moyeu (22) tournant vers une zone du flux située relativement plus proche de l'axe (A) du flux passant par le moyeux (22) tournant, et **en ce que** l'organe redresseur (3) de flux comporte une pluralité de pales (13) statiques cintrées de façon symétrique autour d'un axe de révolution sensiblement confondu avec l'axe (A) du flux gazeux de refroidissement passant par la partie centrale du générateur (2).

2. Pile selon la revendication 1, **caractérisée en ce que** la ou les pales (13) du redresseur (3) sont cintrées selon une première direction sensiblement perpendiculaire à l'axe (A) du flux et selon une seconde direction sensiblement parallèle à l'axe (A) du flux, pour rediriger au moins une partie du flux gazeux ayant un débit relativement plus important vers au moins une partie du flux ayant un débit relativement plus faible.

3. Pile selon l'une quelconque des revendications 1 ou 2, **caractérisée en ce que** le générateur (2) d'un flux gazeux est espacé de l'empilement (1) d'une distance comprise entre 15 et 60 mm et de préférence de l'ordre de 30 mm.

4. Pile selon l'une quelconque des revendications 1 à 3, **caractérisée en ce que** l'organe redresseur (3) de flux est espacé de l'empilement (1) d'une distance (D) supérieure à 10 mm et de préférence comprise entre 20 et 35 mm.

5. Pile selon l'une quelconque des revendications 1 à 4, **caractérisée en ce que** au moins un organe redresseur (3) de flux comporte au moins trois pales (13) statiques et de préférence six à huit pales (13) statiques.

6. Pile selon l'une quelconque des revendications 1 à 5 **caractérisée en ce que** les pales (13) statiques de l'organe redresseur (3) sont reliées chacune à un cadre (33) extérieur.

7. Pile selon l'une quelconque des revendications 1 à 6, **caractérisée en ce qu'**elle comprend plusieurs générateurs (2) d'un flux gazeux adjacents destinés à refroidir respectivement des zones adjacentes correspondantes de l'empilement (1) et **en ce qu'**elle comporte un organe redresseur (3) respectif associé à chaque générateur (2) d'un flux gazeux.

8. Pile à combustible selon l'une quelconque des revendications 1 à 7, **caractérisée en ce qu'**elle est du type à membrane échangeuse de protons.

## Claims

1. Fuel cell comprising a plurality of adjacent cell elements forming a stack (1) of cell elements, a device for cooling said stack (1) of cell elements by forced heat exchange with a coolant gas such as air by means of at least one generator (2) of a gas flow along an airstream axis (A), the fuel cell comprising at least one gas flow stator member (3) placed between the stack (1) of cell elements and the generator (2), the stator member (3) comprising at least one static blade (13) formed to reduce the unevenness of the gas flow rate originating from the generator (2) in a direction substantially perpendicular to the axis (A) of the flow before it arrives at the stack (1), **characterized in that** the generator (2) of a gas flow is a blowing rotor comprising at least one rotating blade (12) connected to a rotating hub (22) and wherein the static blade or blades (13) of the stator (3) are curved in order to redirect a portion of the flow situated relatively distant from the axis (A) of the flow passing by the rotating hub (22) to a zone of the flow situated relatively closer to the axis (A) of the flow passing by the rotating hub (22), and that the flow stator member (3) comprises a plurality of static blades (13) curved in a symmetrical manner about an axis of revolution substantially indistinguishable from the axis (A) of the cooling gas flow passing by the central portion of the generator (2).

2. Fuel cell according to Claim 1, **characterized in that** the blade or blades (13) of the stator (3) are curved in a first direction substantially perpendicular to the axis (A) of the flow and in a second direction substantially parallel to the axis (A) of the flow, in order to redirect at least a portion of the gas flow having a relatively greater flow rate toward at least a portion of the flow having a relatively smaller flow rate.

3. Fuel cell according to either one of Claims 1 or 2, **characterized in that** the generator (2) of a gas flow is spaced from the stack (1) at a distance of between 15 and 60 mm and preferably of the order of 30 mm.

4. Fuel cell according to any one of Claims 1 to 3, **characterized in that** the flow stator member (3) is spaced from the stack (1) at a distance (D) of more than 10 mm and preferably of between 20 and 35 mm.

5. Fuel cell according to any one of Claims 1 to 4, **characterized in that** at least one flow stator member (3) comprises at least three static blades (13) and preferably six to eight static blades (13).

6. Fuel cell according to any one of Claims 1 to 5, **characterized in that** the static blades (13) of the stator member (3) are each connected to an outer frame (33).

7. Fuel cell according to any one of Claims 1 to 6, **characterized in that** it comprises several adjacent gas flow generators (2) designed to cool respectively corresponding adjacent zones of the stack (1) and which comprises a respective stator member (3) associated with each generator (2) of a gas flow.

8. Fuel cell according to any one of Claims 1 to 7, **characterized in that** it is of the of proton-exchange membrane type.

## Patentansprüche

1. Brennstoffzelle, umfassend eine Vielzahl von benachbarten Zellen, die einen Zellenstapel (1) formen, eine Kühlvorrichtung für diesen Zellenstapel (1) durch Zwangswärmeaustausch mit einem Kühlgas wie z.B. Luft mithilfe mindestens eines Generators (2), der entlang einer Strömungsachse (A) einen gasförmigen Strom erzeugt, wobei die Brennstoffzelle mindestens ein Leitwerk (3) für den gasförmigen Strom umfasst, das zwischen dem Zellenstapel (1) und dem Generator (2) angeordnet ist, das Leitwerk (3) mindestens ein statisches Schaufelblatt (13) aufweist, das geformt ist, um die Heterogenität des Durchsatzes des aus dem Generator (2) kommenden gasförmigen Stroms entlang einer Richtung im Wesentlichen rechtwinklig zur Strömungsachse (A) zu verringern, bevor er am Stapel (1) ankommt, **dadurch gekennzeichnet, dass** der Generator (2) des gasförmigen Stroms eine blasende Luftschaufel ist, die mindestens ein drehbares Schaufelblatt (12) aufweist, das mit einer drehbaren Nabe (22) verbunden ist, und dadurch, dass das statische Schaufelblatt oder die statischen Schaufelblätter (13) des Leitwerks (3) gekrümmt ist (sind), um einen Teil des Stroms, der von der Strömungsachse (A), die durch die drehbare Nabe (22) geht, relativ weit entfernt ist, zu einer Zone des Stroms hin umzuleiten, die relativ näher an der durch die drehbare Nabe (22) gehenden Strömungsachse (A) liegt, und dadurch, dass das Leitwerk (3) des Stroms eine Vielzahl von statischen Schaufelblättern (13) umfasst, die auf symmetrische Weise um eine Drehachse herum gekrümmt sind, die im Wesentlichen mit der durch den zentralen Teil des Generators gehenden Achse des gasförmigen Stroms (A) identisch ist.

2. Brennstoffzelle nach Anspruch 1, **dadurch gekennzeichnet, dass** das Schaufelblatt oder die Schaufelblätter (13) des Leitwerks (3) entlang einer ersten Richtung gekrümmt sind, die im Wesentlichen rechtwinklig zur Strömungsachse (A) ist, und entlang einer zweiten Richtung, die im Wesentlichen parallel zur Strömungsachse (A) ist, um mindestens einen Teil des gasförmigen Stroms, der einen relativ höheren Durchsatz hat, zu mindestens einem Teil des Stroms hin umzuleiten, der einen relativ niedrigeren Durchsatz hat.

3. Brennstoffzelle nach einem der Ansprüche 1 oder 2, **dadurch gekennzeichnet, dass** der Generator (2) eines gasförmigen Stroms vom Stapel (1) um eine Entfernung beabstandet ist, die zwischen 15 und 60 mm liegt, und bevorzugt in der Größenordnung von 30 mm.

4. Brennstoffzelle nach einem der Ansprüche 1 bis 3, **dadurch gekennzeichnet, dass** das Leitwerk (3) des Stroms vom Stapel (1) um eine Entfernung (D) beabstandet ist, die größer als 10 mm ist und bevorzugt zwischen 20 und 35 mm liegt.

5. Brennstoffzelle nach einem der Ansprüche 1 bis 4, **dadurch gekennzeichnet, dass** mindestens ein Leitwerk (3) des Stroms mindestens drei statische Schaufelblätter (13) und bevorzugt sechs bis acht statische Schaufelblätter (13) umfasst.

6. Brennstoffzelle nach einem der Ansprüche 1 bis 5, **dadurch gekennzeichnet, dass** die statischen Schaufelblätter (13) des Leitwerks (3) alle mit einem Außenrahmen (33) verbunden sind.

7. Brennstoffzelle nach einem der Ansprüche 1 bis 6, **dadurch gekennzeichnet, dass** sie mehrere benachbarte Generatoren (2) eines gasförmigen Stroms umfasst, die jeweils dazu bestimmt sind, entsprechende benachbarte Zonen des Stapels (1) zu kühlen, und dadurch, dass sie für jeden Generator (2) eines gasförmigen Stroms ein jeweiliges Leitwerk (3) aufweist.

8. Brennstoffzelle nach einem der Ansprüche 1 bis 7, **dadurch gekennzeichnet, dass** sie des Typs mit Protonenaustauschmembran ist.
